Europäisches Patentamt

European Patent Office

Office européen des brevets

(11) Publication number: **0 302 146 B1**

# EUROPEAN PATENT SPECIFICATION

(45) Date of publication of patent specification: **19.02.92**  (51) Int. Cl.⁵: **H04K  3/00**

(21) Application number: **87201481.6**

(22) Date of filing: **04.08.87**

(54) **A receiver for, and method to receive, frequency hopped signals.**

(43) Date of publication of application:
**08.02.89 Bulletin  89/06**

(45) Publication of the grant of the patent:
**19.02.92 Bulletin  92/08**

(84) Designated Contracting States:
**DE FR IT SE**

(56) References cited:
**GB-A- 2 123 256**
**GB-A- 2 186 156**

**IEEE INTERNATIONAL CONFERENCE ON COMMUNICATIONS, Philadelphia, 13th-17th June 1982, vol. 3, pages 6B.2.1-6B.2.5, New York, US; S.M. ELNOUBI: "Performance of frequency hopped MSK spread spectrum mobile radio system with differential detection"**

**Idem**

(73) Proprietor: **N.V. Philips' Gloeilampenfabrieken**
**Groenewoudseweg 1**
**NL-5621 BA Eindhoven(NL)**

(72) Inventor: **Walters, Nigel Jon c/o MEL**
**Manor Royal**
**Crawley West Sussex RH10 2PZ(GB)**

(74) Representative: **Moody, Colin James et al**
**PHILIPS ELECTRONICS Patents and Trade Marks Department Philips House 188 Tottenham Court Road**
**London W1P 9LE(GB)**

Rank Xerox (UK) Business Services

## Description

The present invention relates to a method of, and receiver for, frequency hopped signals.

As is known in frequency hopped communications systems wherein a signal is switched between a plurality of channels in accordance with a desired sequence which may be a pseudo-random sequence, the spacing between the available channels being substantially constant, in order for a receiver to receive correctly a transmitted signal, then it must be switched between the available channels in synchronism with the switching at the transmitter. Thus not only must the sequence generators in the transmitter and in the receiver be capable of producing the same sequence, but also they must be synchronised with each other. An unauthorised person wishing to listen to a frequency hopped signal either has to learn of the sequence by carefully monitoring the transmissions or simply have a large number of receivers each tuned to a different one of the channels, and then combine the output of these receivers. In the former technique time is lost in determining what the sequence is, and if the sequence is changed then the unauthorised listener has to begin again to learn the new sequence. In the second case a large amount of equipment is required which renders the system expensive, and additionally suitably large facilities are required to store and operate the equipment. Consequently it is unsuitable for portable use and for use in mobiles.

According to the present invention there is provided a method of receiving a frequency hopped information signal which at any instant is modulated on one of a plurality of equally frequency-spaced carrier signals of which only one of the carrier signals is transmitted at any one time, characterised by using a short pseudo-random bit sequence to generate a signal having a comb spectrum with a frequency spacing equal to said equally spaced carrier signals and mixing said equally spaced carrier signals with the information signal which is modulated on an unknown one of the plurality of the carrier signals to produce a plurality of auxiliary signals having a frequency spacing equal to said plurality of equally spaced carrier signals, said auxiliary signals having the same frequency and spacing from each other for each of said plurality of equally frequency spaced input signals, and separating one of said auxiliary signals modulated with said information signal from the remaining auxiliary signals to provide a signal which remains constant in frequency modulation with said information signal for demodulation of said information signal.

The present invention also provides a receiver for use with the method in accordance with the present invention, the receiver comprising signal mixing means for mixing a frequency hopped information signal with a locally generated signal having a comb spectrum with a frequency spacing equal to said equally spaced carrier signals and providing a plurality of auxiliary signals having a frequency spacing equal to said plurality of equally spaced carrier signals and demodulating means for recovering the information signal from the auxiliary signals, characterised in that a short pseudo-random bit sequence generator (16) is used to provide said comb spectrum and in that the demodulating means (18 or 26) is a single frequency demodulator having a predetermined constant frequency passband.

The receiver operating in accordance with the method of the present invention effectively is able to listen simultaneously to all the channels and at the same time is simple and thereby relatively inexpensive to construct. An advantage of using a pseudo-random bit sequence generator is that the amplitude is more of less constant and the spectrum is reasonably flat.

The signal having a comb spectrum may be provided in several ways, for example by connecting the short pseudo-random bit sequence generator to a balanced mixer to which the frequency hopped signal is applied. The clock frequency of the generator and the length of the sequence are arranged so that the sequence repeats in a time equal to the reciprocal of the channel spacing e.g. every 100 microseconds in the case of a 10 kHz channel spacing and has a comb spectrum on harmonics of the channel spacing. The output of the double balanced mixer in response to every input signal is a line spectrum, with each component thereof containing the modulation of the input signal. Thus a component of the line spectrum of every signal which is a multiple of the channel spacing frequency away from the receiver frequency, is mixed into the receiver passband.

A second way of providing the desired comb spectrum of frequencies is to couple the output of the local oscillator to a double balanced mixer to which is connected the short pseudo-random bit sequence generator whose sequence repeats at intervals corresponding to the channel spacing. The output of the double balanced mixer comprises a line spectrum which is supplied to the mixer of the receiver thus converting the antenna signal at each of the frequencies denoted by the lines in the spectrum to the intermediate frequency of the receiver.

If it is desired to make the receiver adaptable to other frequency hopping signal systems, then the pseudo-random bit sequence generator can be made adaptable and also its clock rate can be varied.

2

Said M. Elnoubi in a paper "Performance of Frequency Hopped MSK Spread Spectrum Mobile Radio System with Differential Detection" 1982 IEEE International Conference on Communications, Vol. 3, Pages 6B2.1 to 6B2.5 discloses a system in which a signal is mixed with a frequency synthesiser output in a balanced modulator to produce a spread spectrum signal with a total bandwidth of 20 MHz. The hopping pattern of the frequency synthesiser is controlled by a code sequence supplied to the frequency synthesiser. This code sequence is also supplied to the receiver. At the receiver the frequency hopped spread spectrum signal is applied to a double balanced mixer to which a frequency synthesiser signal is applied whose hopping pattern is controlled by the code sequence. The dehopped and despread signal is bandpass filtered, differentially detected and low pass filtered. This paper does not disclose how a narrowband receiver can be used to demodulate a frequency hopped information signal.

Also known from GB-A-2123256 is a radio communication jamming transmitter which comprises an oscillator having an output frequency, for example 25 kHz corresponding to the channel spacing frequency, the output of the oscillator is applied to a monostable circuit which converts the oscillator signal into a train of pulses having a very narrow pulse width, for example 30 nanoseconds. These pulses are applied to a controllable bandpass filter which passes a band of high frequency harmonics in the form of a comb spectrum of jamming signals spaced apart by the channel spacing frequency. This patent specification also discloses a jammer comprising a bank of three comb spectrum generators covering three contiguous 20 MHz bands of the spectrum. In order to make more effective use of the comb spectrum generators a control circuit is disclosed to detect in which one (or more) of the 20 MHz bands the signal to be jammed lies. For each comb spectrum generator, the detected signal and the comb spectrum generator output are mixed and the products of mixing are applied to a low pass filter by way of an ac coupling. The pass band of this low pass filter is arranged to be such as to correspond with or nearly correspond with the frequency of a signal produced by the respective comb spectrum generator. The output of the low pass filter is amplified and demodulated to produce a signal for actuating a switch to connect the associated comb spectrum generator to a power amplifier. The use of a pulse generator to produce a signal having a comb spectrum has certain disadvantages compared to using a short pseudo-random bit sequence generator as used in the method in accordance with the present invention.

Driving a double balanced mixer with the pseudo-random bit sequence provides a higher conversion gain because the mixer is passing signals continuously rather than for only a pulsed duration. This also provides a better signal to noise ratio is obtained under these conditions.

As the gain is higher using the short pseudo-random bit sequence, the amplitude of the output mixer is higher. Additionally, the shape of the comb spectrum is more precise than that of the monostable circuit output of GB-A-2123256.

The present invention will now be described, by way of example, with reference to the accompanying drawings, wherein:

Figure 1 is a block schematic diagram of a first embodiment of the present invention,

Figure 2 illustrates a comb spectrum produced by a short pseudo-random bit sequence,

Figure 3 shows a line spectrum formed by multiplying an antenna signal by the pseudo-random bit sequence,

Figure 4 illustrates in diagrams 4A to 4D the operation of the embodiment shown in Figure 1,

Figure 5 is a block schematic circuit diagram of a second embodiment of the present invention, and

Figure 6 illustrates in diagrams 6A to 6D the operation of the embodiment shown in Figure 5.

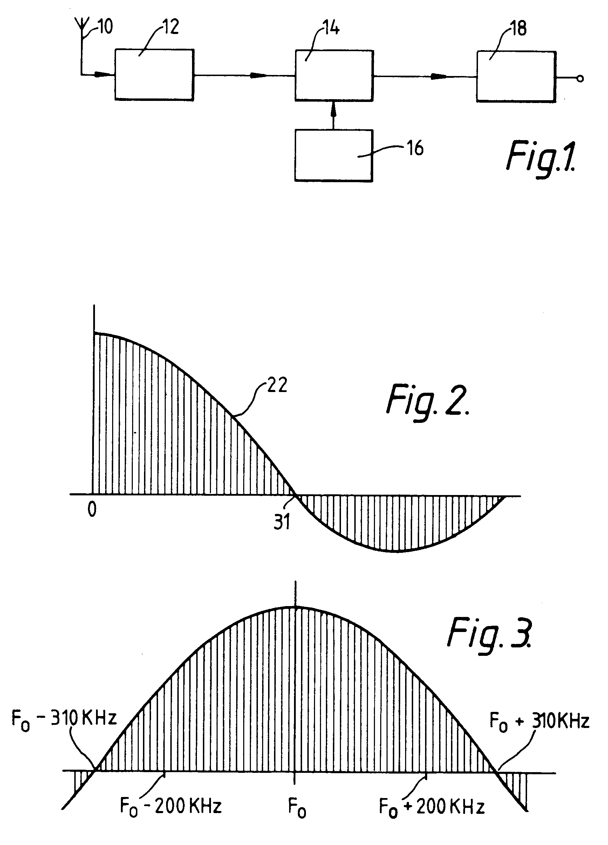

Referring to Figure 1 the receiver comprises an antenna 10 which is coupled to an antenna matching unit 12, the output of which is coupled to a double balanced mixer 14. A short sequence pseudo-random bit sequence generator 16 is coupled to the double balanced mixer 14. The output of the mixer 14 is connected to a single-frequency demodulator 18 of conventional design.

In order to illustrate the operation of this embodiment of the present invention, it will be assumed that the frequency hopping system has up to forty channels with a channel spacing of 10 kHz.

Figure 2 is a sin x/x curve which comprises a comb spectrum on harmonics of 10 kHz. The spectrum is produced by a short pseudo-random bit sequence which in this example is 31 bits long and is clocked at a rate of 310 kHz. Consequently the sequence is repeated every 100 $\mu$S. A characteristic of this sin x/x curve is that 90% of its power is contained in the main lobe 22. By applying this spectrum of frequencies to the double balanced mixer 14 the incoming frequency hopped signal received at the antenna 10 is spread to a comb of signals one element of which always falls in the passband of the receiver 18.

Figure 3 shows the output from the double balanced mixer 14 and comprises a centre frequency Fo which is the frequency of the received signal together with a plurality of signals at frequencies which are a multiple of 10 kHz away from the centre frequency Fo. Within 200 kHz either side of Fo the amplitudes of the signals from the mixer 14 are within 7 dB of each other. With respect to a centre frequency Fo the amplitude diminishes and approaches zero some 310 kHz away from Fo. When these signals are frequency translated in the single-frequency demodulator 18, one of them will correspond to that to which the demodulator is tuned whilst the remainder are rejected.

In use once the demodulator 18 has been adjusted to pick-up a particular channel somewhere near the centre of the frequency hopping band then it will without any further adjustment pick-up signals present in any of the other frequency hopped channels provided that they are of a known constant spacing.

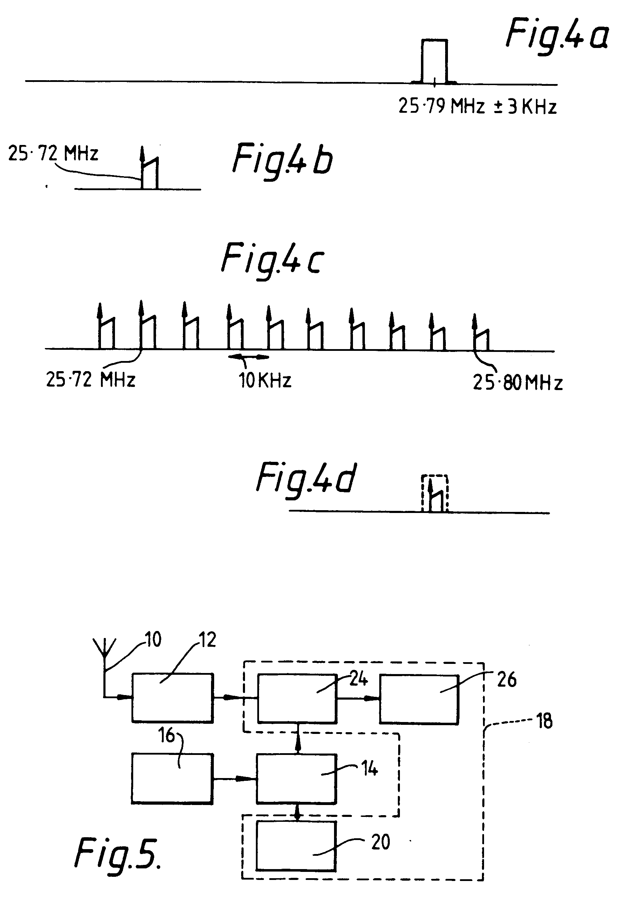

Figure 4 illustrates the operation of the first embodiment of the present invention and assumes that the frequency hopped system operates on 10 kHz channel spacing and that the single-frequency demodulator 18 is tuned to 25.79 MHz with a bandwidth of 6 kHz (i.e. ± 3 kHz) - diagram 4a. The currently transmitted signal which is received at the antenna 10 is at 25.72 MHz - diagram 4b. After being applied to the double balanced mixer 14, the output therefrom comprises a plurality of signals, diagram 4c, each having its own carrier frequency and an amplitude which varies relative to 25.72 MHz (Fo) as shown in Figure 3. For the sake of clarity only a few of these signals are illustrated. However it will be noted that one of the signals is at 25.79 MHz which corresponds to the passband of the demodulator 18 and accordingly is subsequently demodulated , diagram 4d.

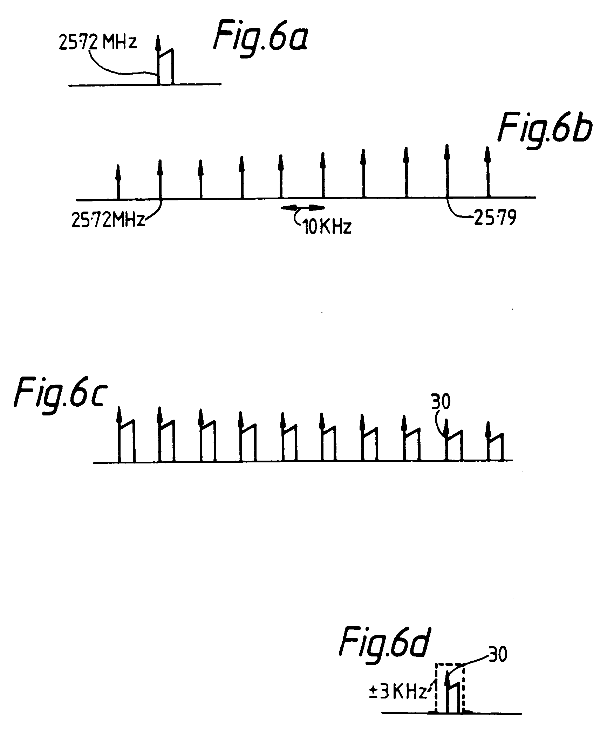

Figures 5 and 6 show and illustrate the operation of a second embodiment of the present invention in which instead of multiplying the antenna signal, the signal from a local oscillator 20 is multiplied by the output of the short sequence pseudo-random bit sequence generator 16 in the double balanced mixer 14. The output from the mixer 14 comprises a plurality of simultaneous local oscillator signals which are frequency spaced apart by the channel spacing (10 kHz) - diagram 6b in which for convenience of reference the upstanding arrows show the local oscillator frequencies for different frequencies in the frequency hopping range, for example the reference to 25.79 relates to the local oscillator frequency to receive a signal on 25.79 MHz. These local oscillator signals together with the antenna signal, diagram 6a, are applied to a mixer 24 in the demodulator 18. The output of the mixer comprises a plurality of frequency translated signals separated from each other by the channel spacing - diagram 6c the receiver IF being referenced 30. The output of the mixer 24 is applied to an I.F. amplifier 26 which selects one of these signals - diagram 6d, and passes it onto a suitable demodulating means which may comprise a phase or frequency demodulator or SSB demodulator (not shown).

In implementing the embodiments of the present invention the pseudo-random bit sequence generator may comprise integrated circuits type 7496 and 7486. Alternatively instead of using a pseudo-random bit sequence generator one could supply a series of pulses whose pulse repetition frequency corresponds to the desired channel spacing, for example in Figure 5 the pulses having a pulse repetition frequency of 10 kHz and pulse length around $3\mu S$ are applied to the mixer 14 to produce a comb spectrum with lines spaced by 10 kHz.

The single-frequency demodulator 18 (which may be tunable) should have a good selectivity in order to reject all those channels not selected.

In order to cope with frequency hopping systems in which the channel spacing is different then the pseudo-random bit sequence generator can be made adaptable so that its sequence length and clock rate are adjustable as desired.

## Claims

1. A method of receiving a frequency hopped information signal which at any instant is modulated on one of a plurality of equally frequency-spaced carrier signals of which only one of the carrier signals is transmitted at any one time, characterised by using a short pseudo-random bit sequence to generate a signal having a comb spectrum with a frequency spacing equal to said equally spaced carrier signals and mixing said equally spaced carrier signals with the information signal which is modulated on an unknown one of the plurality of the carrier signals to produce a plurality of auxiliary signals having a frequency spacing equal to said plurality of equally spaced carrier signals, said auxiliary signals having the same frequency and spacing from each other for each of said plurality of equally frequency spaced input signals, and separating one of said auxiliary signals modulated with said information signal from the remaining auxiliary signals to provide a signal which remains constant in frequency modulation with said information signal for demodulation of said information signal.

2. A method as claimed in claim 1, characterised in that said equally spaced carrier signals are generated by applying the short pseudo-random bit sequence and the information signal to a balanced modulator.

3. A method as claimed in claim 1, characterised in that said equally spaced carrier signals are generated by applying the short pseudo-random bit sequence and a local oscillator signal to a balanced mixer.

4. A receiver for use with the method as claimed in claim 1, comprising signal mixing means for mixing a frequency hopped information signal with a locally generated signal having a comb spectrum with a frequency spacing equal to said equally spaced carrier signals and providing a plurality of auxiliary signals having a frequency spacing equal to said plurality of equally spaced carrier signals and demodulating means for recovering the information signal from the auxiliary signals, characterised in that a short pseudo-random bit sequence generator (16) is used to provide said comb spectrum and in that the demodulating means (18 or 26) is a single frequency demodulator having a predetermined constant frequency passband.

5. A receiver as claimed in claim 4, characterised in that the signal mixing means comprises a double balanced mixer (14) having a first input for the frequency hopped information signal and a second input coupled to the short pseudo-random bit sequence generator (16).

6. A receiver as claimed in claim 4, characterised in that the means for providing the locally generated comb spectrum signal comprises a double balanced mixer (14) having a first input coupled to a local oscillator (20), a second input coupled to the short pseudo-random bit sequence generator (16) and an output for a local oscillator signal having a comb spectrum.

7. A receiver as claimed in claim 4, 5 or 6, characterised in that the short pseudo-random bit sequence generator is adaptable to other frequency hopped systems.

**Revendications**

1. Procédé de réception d'un signal d'information à sauts de fréquence qui, à tout instant, est modulé sur l'un d'une pluralité de signaux porteurs équidistants en fréquence dont un seulement est émis à un moment donné quelconque, caractérisé en ce qu'on utilise une séquence de bits pseudoaléatoire courte pour générer un signal présentant un spectre en peigne avec un espacement en fréquence égal à celui desdits signaux porteurs équidistants et on mélange ces signaux porteurs équidistants avec le signal d'information qui est modulé sur un signal porteur inconnu de la pluralité de signaux porteurs pour produire une pluralité de signaux auxiliaires présentant un espacement en fréquence égal à celui ladite pluralité de signaux porteurs équidistants, les signaux auxiliaires présentant la même fréquence et le même espacement mutuel pour chacun des signaux d'entrée équidistants en fréquence de ladite pluralité, et on sépare l'un de ces signaux auxiliaires modulés avec le signal d'information des autres signaux auxiliaires en vue de fournir un signal qui reste constant en modulation de fréquence avec le signal d'information pour la démodulation de ce signal d'information.

2. Procédé suivant la revendication 1, caractérisé en ce que les signaux porteurs équidistants sont générés par l'application de la séquence de bits pseudoaléatoire courte et du signal d'information à un modulateur équilibré.

3. Procédé suivant la revendication 1, caractérisé en ce que les signaux porteurs équidistants sont générés par application de la séquence de bits pseudoaléatoire courte et d'un signal d'oscillateur local à un mélangeur équilibré.

4. Récepteur à utiliser avec le procédé suivant la revendication 1, comprenant un moyen mélangeur de signaux pour mélanger un signal d'information à sauts de fréquence avec un signal généré localement présentant un spectre en peigne avec un espacement en fréquence égal à celui des signaux porteurs équidistants et pour fournir une pluralité de signaux auxiliaires présentant un espacement en fréquence égal à celui de la pluralité de signaux porteurs équidistants et un moyen démodulateur pour récupérer le signal d'information des signaux auxiliaires, caractérisé en ce qu'un générateur de séquence de bits pseudoaléatoire courte (16) est utilisé pour fournir le spectre en peigne et en ce que le moyen démodulateur (18 ou 26) est un démodulateur monofréquence à bande passante de fréquence constante prédéterminée.

5. Récepteur suivant la revendication 4, caractérisé en ce que le moyen mélangeur de signaux comprend un mélangeur doublement symétrique (14) comportant une première entrée pour le signal d'information à sauts de fréquence et une seconde entrée couplée au générateur de séquence de bits pseudoaléatoire courte (16).

6. Récepteur suivant la revendication 4, caractérisé en ce que le moyen destiné à fournir le signal de spectre en peigne généré localement comprend un mélangeur doublement symétrique (14) comportant une première entrée couplée à un oscillateur local (20), une seconde entrée couplée au générateur de séquence de bits pseudoaléatoire courte (16) et une sortie pour un signal d'oscillateur local présentant un spectre en peigne.

7. Récepteur suivant la revendication 4, 5 ou 6, caractérisé en ce que le générateur de séquence de bits pseudoaléatoire courte peut être adapté à d'autres systèmes à sauts de fréquence.

**Patentansprüche**

1. Verfahren zum Empfangen eines Informationssignals im Frequenzsprungverfahren ,wobei dieses Signal jeweils einem einer Anzahl Trägersignale mit gleichen Frequanzabständen aufmoduliert ist, wobei jeweils nur eines der Trägersignale übertragen wird, dadurch gekennzeichnet, daß zum Erzeugen eines Signals mit einem Kammspektrum mit Frequenzabständen entsprechend denen der Trägersignale eine kurze pseudobeliebige Bitfolge benutzt wird und daß diese Trägersignale mit gleichen Frequenzabständen mit dem einem unbekannten Trägersignal der Anzahl Trägersignale aufmodulierten Informationssignal vermischt wird zum Erzeugen einer Anzahl Hilfssignale mit Frequenzabständen entsprechend denen der Trägersignale mit gleichen Frequenzabständen, wobei diese Hilfssignale für jedes der genannten Anzahl Eingangssignale mit gleichen Frequenzabständen dieselbe Frequenz und dieselben Frequenzabstände untereinander aufweisen, und daß eines der genannten mit dem genannten Informationssignal modulierten Hilfssignale von den weiteren Hilfssignalen getrennt wird zum Schaffen eines Signals, das bei der Frequenzmodulation mit dem genannten Informationssignal zur Demodulation des genannten Informationssignals konstant bleibt.

2. Verfahren nach Anspruch 1, dadurch gekennzeichnet, daß die genannten Trägersignale mit gleichen Frequenzabständen dadurch erzeugt werden, daß die kurze pseudobeliebige Bitfolge und das Informationssignal einem Gegentaktmodulator zugeführt werden.

3. Verfahren nach Anspruch 1, dadurch gekennzeichnet, daß die genannten Trägersignale mit gleichen Frequenzabständen dadurch erzeugt werden, daß die kurze pseudobeliebige Bitfolge und ein Ortsoszillatorsignal einer Gegentaktmischstufe zugeführt werden.

4. Empfänger zum Gebrauch bei dem Verfahren nach Anspruch 1 mit einem Signalmischmittel zum Mischen eines Frequenzsprung-Informationssignals mit einem örtlich erzeugten Signal mit einem Kammspektrum mit Frequenzabständen entsprechend denen der genannten Trägersignale und zum Schaffen einer Anzahl Hilfssignale mit Frequenzabständen entsprechend denen der genannten Anzahl Trägersignale und mit Demodulationsmitteln zum Wiedergewinnen des Informationssignals aus den Hilfssignalen, dadurch gekennzeichnet, daß ein Generator (16) für kurze pseudobeliebige Bitfolgen verwendet wird zum Erzeugen des genannten Kammspektrums und daß das Demodulationsmittel (18 oder 26) ein einfacher Frequenzdemodulator ist mit einem vorbestimmten konstanten Frequenzdurchlaßband.

5. Empfänger nach Anspruch 4, dadurch gekennzeichnet, daß das Signalmischmittel eine doppelte Gegentaktmischstufe (14) aufweist mit einem ersten Eingang für das frequenzversprungene Informationssignal und einem mit dem Generator (16) für die kurze pseudobeliebige Bitfolge gekoppelten zweiten Eingang.

6. Empfänger nach Anspruch 4, dadurch gekennzeichnet, daß das Mittel zum Schaffen des örtlich erzeugten Kammspektrumsignals eine doppelte Gegentaktmischstufe (14) mit einem ersten mit einem Ortsoszillator (20) gekoppelten Eingang, einem zweiten mit dem Generator (16) für die kurze pseudobeliebige Bitfolge gekoppelten Eingang und einem Ausgang für ein Ortsoszillatorsignal mit einem Kammspektrum.

7. Empfänger nach Anspruch 4, 5 oder 6, dadurch gekennzeichnet, daß der Generator für die kurze pseudobeliebige Bitfolge an andere Frequenzsprungsysteme angepaßt werden kann.

Fig.1.

Fig. 2.

Fig. 3.

*Fig.4a*

25·79 MHz ± 3 KHz

25·72 MHz  *Fig.4b*

*Fig.4c*

25·72 MHz          10 KHz          25·80 MHz

*Fig.4d*

*Fig.5.*

## Fig.6a

25.72 MHz

## Fig.6b

25.72MHz          10KHz          25.79

## Fig.6c

30

## Fig.6d

30

±3KHz